(19) 

Europäisches
Patentamt
European
Patent Office
Office européen
des brevets

(11) **EP 2 813 776 B1**

(12) **EUROPEAN PATENT SPECIFICATION**

(45) Date of publication and mention
of the grant of the patent:
**25.03.2020 Bulletin 2020/13**

(21) Application number: **13805728.6**

(22) Date of filing: **29.07.2013**

(51) Int Cl.:
*F24F 11/30* (2018.01)      *F24F 11/76* (2018.01)
*F24F 11/77* (2018.01)      *F24F 110/10* (2018.01)

(86) International application number:
**PCT/CN2013/080315**

(87) International publication number:
**WO 2014/094429 (26.06.2014 Gazette 2014/26)**

(54) **method and controller for an air conditioning system**

Verfahren und Steuerung für ein Klimaanlagensystem

système de contrôle et procédé permattant de commander un climatiseur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2012 CN 201210551940**

(43) Date of publication of application:
**17.12.2014 Bulletin 2014/51**

(73) Proprietor: **Huawei Technologies Co., Ltd.
Longgang District
Shenzhen, Guangdong 518129 (CN)**

(72) Inventor: **ZHANG, Guanghe
Shenzhen, Guangdong 518129 (CN)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
**CN-A- 101 586 866      CN-A- 102 980 274
CN-Y- 2 684 070      JP-A- S6 159 145
JP-A- H10 148 382      JP-A- 2011 058 734**

EP 2 813 776 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to an air conditioning control technology, and in particular, to an air conditioning system fan control method and apparatus, and an air conditioning system.

### BACKGROUND

An air conditioning system generally includes a plurality of fans and compressors. During start-up, it is necessary to start up the fans first, and then start up the compressors, so as to ensure reliable working of each element in the system with a cooling effect of the fans.

In the prior art, during working of an air conditioning system, all the fans constantly run at a rated speed, that is, total output air volume of the fans is constant; in other words, the total output air volume of the fans is constantly maintained at maximum air volume. That is to say, the energy consumption of the fans in the whole air conditioning system is relatively high.

The document JP S61 59145 A discloses an air conditioner having two fans. If a large difference between a set temperature and a room temperature is detected, both fans are operated at high speed. When the difference between the room temperature and the set temperature is small, the operation of one fan is stopped, and only the other fan is operated at low speed. Thereby JP S61 59145 A discloses an air conditioning fan control method according to the preamble of claim 1 and a controller for an air conditioning system according to the preamble of claim 5.

### SUMMARY

Embodiments of the present invention provide an air conditioning system fan control method and apparatus, and an air conditioning system, so as to solve the problem in the prior art that the energy consumption is relatively high because total output air volume of all fans in an air conditioning system is constant.

In an aspect, the present invention provides an air conditioning system fan control method, including:

obtaining an actual indoor temperature, and calculating a temperature difference between the actual temperature and a preset target temperature;

comparing the temperature difference with threshold intervals to obtain a threshold interval where the temperature difference is located, where the threshold intervals are separated by several thresholds, and each threshold interval corresponds to a fan quantity value;

obtaining a fan quantity value N corresponding to the threshold interval where the temperature difference is located according to correspondence between the threshold intervals and fan quantity values, where N is a natural number; and

controlling N fans among all the fans to run at a first speed, and controlling fans other than the N fans among all the fans to run at a second speed, where the first speed is higher than the second speed, N is smaller than the total number of fans M, and M is a natural number.

In a first possible implementation manner of the first aspect, before the obtaining an actual indoor temperature, and calculating a temperature difference between the actual temperature and a preset target temperature, the method further includes:

generating correspondence between threshold intervals and fan quantity values.

With reference to the first possible implementation manner of the first aspect, in a second possible implementation manner of the first aspect, the obtaining a fan quantity value N corresponding to the threshold interval where the temperature difference is located according to correspondence between the threshold intervals and the fan quantity values includes:

if the threshold interval where the temperature difference is located is a first threshold interval, obtaining a fan quantity value N1 corresponding to the first threshold interval;

if the threshold interval where the temperature difference is located is a second threshold interval, obtaining a fan quantity value N2 corresponding to the second threshold interval; and

if the threshold interval where the temperature difference is located is a third threshold interval, obtaining a fan quantity value N3 corresponding to the third threshold interval,

where $N1 > N2 > N3$, and $N1 \leq M$.

With reference to the first aspect or the first possible implementation manner of the first aspect, in a third possible implementation manner of the first aspect, after the controlling N fans among all the fans to run at a first speed, and controlling fans other than the N fans among all the fans to run at a second speed, the method further includes:

turning on and/or turning off compressors, so as to control a compressor corresponding to a fan and the fan to form an air conditioning air duct subsystem.

In a second aspect, the present invention provides a controller, including:

an obtaining module, configured to obtain an actual indoor temperature, and calculate a temperature difference between the actual temperature and a preset target temperature;

a comparison module, configured to compare the temperature difference with threshold intervals to obtain a threshold interval where the temperature difference is located, where the threshold intervals are separated by several thresholds, and each threshold interval corresponds to a fan quantity value;

a processing module, configured to obtain a fan quantity value N corresponding to the threshold interval where the temperature difference is located according to correspondence between the threshold intervals and fan quantity values, where N is a natural number; and

a control module, configured to control N fans among all the fans to run at a first speed, and control fans other than the N fans among all the fans to run at a second speed, where the first speed is higher than the second speed, N is smaller than the total number of fans M, and M is a natural number.

In a first possible implementation manner of the second aspect, the controller further includes:
a correspondence generating module, configured to generate correspondence between the threshold intervals and quantity values of fans required to run at the first speed.

In a second possible implementation manner of the second aspect, the processing module includes:

a first control unit, configured to: when the threshold interval where the temperature difference is located is a first threshold interval, obtain a fan quantity value N1 corresponding to the first threshold interval;

a second control unit, configured to: when the threshold interval where the temperature difference is located is a second threshold interval, obtain a fan quantity value N2 corresponding to the second threshold interval; and

a third control unit, configured to: when the threshold interval where the temperature difference is located is a third threshold interval, obtain a fan quantity value N3 corresponding to the second threshold interval,

where N1 > N2 > N3, and N1 ≤ M.

With reference to the second aspect or the first possible implementation manner of the second aspect, in a third possible implementation manner of the second aspect, the controller further includes:
a compressor control module, configured to turn on and/or turn off compressors, so as to control a compressor corresponding to a fan and the fan to form an air conditioning air duct subsystem.

The air conditioning system fan control method and apparatus of the present invention may adjust the number of fans running at a relatively high first speed according to a change of an actual ambient temperature, which reduces the total output air volume of the fans during long-term running, thereby reducing the energy consumption of the fans.

## BRIEF DESCRIPTION OF DRAWINGS

FIG. 1 is a flow chart of an air conditioning system fan control method provided in an embodiment of the present invention;

FIG. 2 is a flow chart of an air conditioning system fan control method provided in another embodiment of the present invention;

FIG. 3 is a flow chart of an air conditioning system fan control method provided in still another embodiment of the present invention;

FIG. 4 is a schematic structural diagram of a controller provided in an embodiment of the present invention;

FIG. 5 is a schematic structural diagram of a controller provided in another embodiment of the present invention;

FIG. 6 is a schematic structural diagram of an embodiment of the processing module in FIG. 4;

FIG. 7 is a schematic structural diagram of a controller provided in still another embodiment of the present invention;

FIG. 8 is a schematic structural diagram of an air conditioning system;

FIG. 9 is a schematic structural diagram of an embodiment of an air conditioning system including three air duct subsystems; and

FIG. 10 is a schematic structural diagram of another embodiment of an air conditioning system including three air duct subsystems.

## DESCRIPTION OF EMBODIMENTS

### Embodiment 1

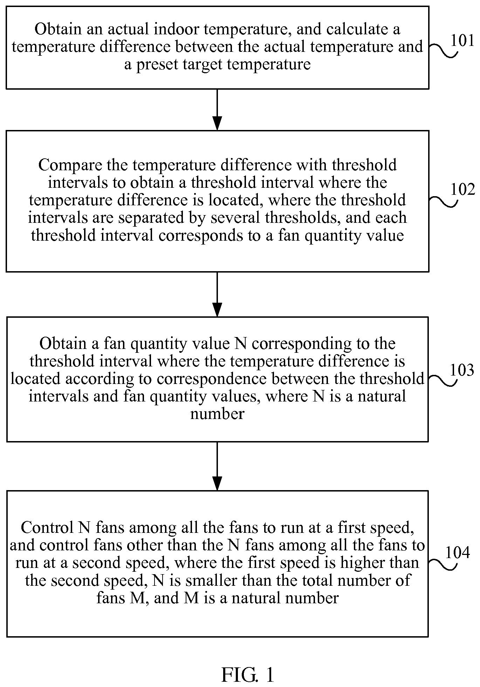

FIG. 1 is a flow chart of an air conditioning system fan control method provided in an embodiment of the present invention. As shown in FIG. 1, this embodiment provides a precise air conditioning system fan control method, including the following steps:

Step 101: Obtain an actual indoor temperature, and calculate a temperature difference between the actual temperature and a preset target temperature.

Step 102: Compare the temperature difference with threshold intervals to obtain a threshold interval where the temperature difference is located, where the threshold intervals are separated by several thresholds, and each threshold interval corresponds to a fan quantity value.

Step 103: Obtain a fan quantity value N corresponding to the threshold interval where the temperature difference is located according to correspondence between the threshold intervals and fan quantity values, where N is a natural number.

Step 104: Control N fans among all the fans to run at a first speed, and control fans other than the N fans among all the fans to run at a second speed, where the first speed is higher than the second speed, N is smaller than the total number of fans M, and M is a natural number.

An entity executing this embodiment may be a processor; the actual temperature may be acquired through a sensor, and the target temperature may be preset in the processor by a user through an input device.

Specifically, before the obtaining an actual indoor temperature, and calculating a temperature difference between the actual temperature and a preset target temperature, the method may further include: generating correspondence between the threshold intervals and the fan quantity values.

Preferably, the thresholds may include a first threshold and a second threshold, where the first threshold is greater than the second threshold. A first threshold interval, a second threshold interval, and a third threshold interval are formed by means of separation of the first threshold and the second threshold, where values in the first threshold interval are greater than the first threshold; values in the second threshold interval are greater than the second threshold and smaller than or equal to the first threshold; and values in the third threshold interval are smaller than or equal to the second threshold. The fan quantity values corresponding to the first threshold interval, second threshold interval, and third threshold interval are N1, N2, and N3 respectively, where $N1>N2>N3$, and $N1 \leq M$.

Further, the obtaining a fan quantity value N corresponding to the threshold interval where the temperature difference is located according to correspondence between the threshold intervals and the fan quantity values may include:

if the threshold interval where the temperature difference is located is a first threshold interval, obtaining a fan quantity value N1 corresponding to the first threshold interval;
if the threshold interval where the temperature difference is located is a second threshold interval, obtaining a fan quantity value N2 corresponding to the second threshold interval; and
if the threshold interval where the temperature difference is located is a third threshold interval, obtaining a fan quantity value N3 corresponding to the second threshold interval, where N3 may be 0, so that all the fans are turned off when the temperature difference is reduced to a certain degree.

It should be noted that, in the correspondence between the threshold intervals and the fan quantity values, the number of thresholds may be more than two, so as to obtain more threshold intervals by means of separation. In other words, apart from the first threshold interval, second threshold interval, and third threshold interval, the threshold intervals may further include a third temperature difference threshold, a fourth temperature difference threshold, and the like. Accordingly, apart from the first quantity N1 and the second quantity N2, the fan quantity value N may further include a third quantity N3 corresponding to the third threshold interval, a fourth quantity N4 corresponding to the fourth threshold interval, and the like. The total number of thresholds may be determined according to the total number of fans. Preferably, the total number of thresholds may be equal to the total number of fans M, and then the total number of the threshold intervals may be M+1. For example, when the total number of fans is three, the thresholds may include a first threshold, a second threshold, and a third threshold; besides, a first threshold interval, a second threshold interval, a third threshold interval, and a fourth threshold interval are formed respectively, and each threshold interval corresponds to a fan quantity value.

Furthermore, after the controlling N fans among all the fans to run at a first speed, and controlling fans other than the N fans among all the fans to run at a second speed, the method may further include: turning on and/or turning off compressors, so as to control a compressor corresponding to a fan to run.

The air conditioning system fan control method provided in the embodiment of the present invention controls different numbers of fans to run at a relatively high first speed based on an actual ambient temperature, and is capable of controlling some fans in the entire precise air conditioning system to run at a rated speed under the premise of satisfying a set refrigeration requirement, thereby reducing the total output air volume of all fans during long-term running, and reducing the energy consumption of the fans.

**Embodiment 2**

In this embodiment, an air conditioning system including a compressor 1, a compressor 2, an evaporator 1, an evaporator 2, a fan 1 used for cooling the evaporator 1, and a fan 2 used for cooling the evaporator 2 is taken as an example to describe the technical solution of the present invention in detail. In addition, the fan 1 and the fan 2 in this embodiment are fans having only two working states, namely, ON (running at a rated speed and outputting constant air volume) and OFF.

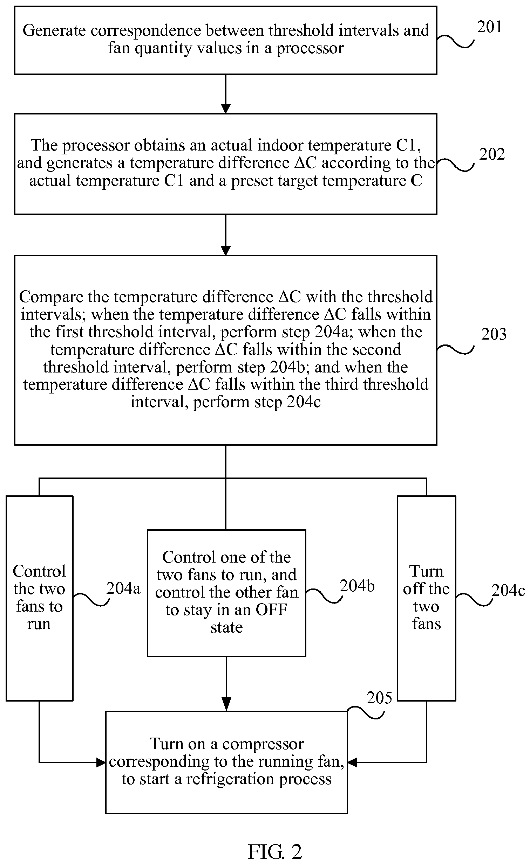

FIG. 2 is a flow chart of an air conditioning system fan control method provided in another embodiment of the present invention. As shown in FIG. 2, the precise air conditioning system fan control method provided in this embodiment includes the following steps:

Step 201: Generate correspondence between threshold intervals and fan quantity values in a processor, where the threshold intervals may include a first threshold interval, a second threshold interval, and a third threshold interval; a fan quantity value N1 corresponding to the first threshold interval is 2, a fan quantity value N2 corresponding to the second threshold interval is 1, and a fan quantity value N3 corresponding to the third threshold interval is 0.

Step 202: The processor obtains an actual indoor temperature C1, and generates a temperature difference ΔC according to the actual temperature C1 and a preset target temperature C, where

$$\Delta C = C1 - C.$$

Step 203: Compare the temperature difference ΔC with the threshold intervals; when the temperature difference ΔC falls within the first threshold interval, perform step 204a; when the temperature difference ΔC falls within the second threshold interval, perform step 204b; and when the temperature difference ΔC falls within the third threshold interval, perform step 204c.

Step 204a: Control the two fans to run.

Step 204b: Control one of the two fans to run, and control the other fan to stay in an OFF state. Definitely, whether the fan 1 or fan 2 is selected to run may be determined according to a specific working condition, and is not limited herein.

Step 204c: Turn off the two fans.

Step 205: Turn on a compressor corresponding to the running fan, to start a refrigeration process. Specifically, when the fan 1 is running and the fan 2 is off, it is feasible to turn on the compressor 1 and turn off the compressor 2; when the fan 2 is running and the fan 1 is off, it is feasible to turn on the compressor 2 and turn off the compressor 1; and when both the fan 1 and fan 2 are off, the compressor 1 and compressor 2 are also in an OFF state.

It should be noted that, in this embodiment, the processor may obtain the actual ambient temperature C1 at a preset time interval, and then perform steps after step 202. In this way, working states of the fan 1 and fan 2 may be dynamically adjusted according to a change of the ambient temperature, so that under the premise of satisfying a refrigeration requirement, unnecessary fans and compressors in the system are turned off in time when the actual ambient temperature C1 declines to a certain value, thereby avoiding unnecessary energy consumption.

The air conditioning system fan control method provided in this embodiment adjusts the number of fans in a running state according to a change of the actual ambient temperature, thereby reducing the total output air volume of fans during long-term running, and reducing the energy consumption of the fans.

**Embodiment 3**

In this embodiment, an air conditioning system including a compressor 1, a compressor 2, an evaporator 1, an evaporator 2, a fan 1 used for cooling the evaporator 1, and a fan 2 used for cooling the evaporator 2 is also taken as an example to describe the technical solution of the present invention in detail. Different from those in Embodiment 2, the fan 1 and fan 2 in this embodiment are fans with adjustable output air volume. Generally speaking, a fan with adjustable output air volume includes more than two working speeds, for example, a high air volume speed and a low air volume speed; or a high air volume speed, a medium air volume speed, and a low air volume speed. When a fan is adjusted to work at the high air volume speed, the fan runs at a rated speed; when a fan is adjusted to work at the low air volume speed or medium air volume speed, the fan runs at a speed lower than the rated speed. Therefore, a fan with adjustable output air volume at least includes three working states, namely, OFF, below the rated speed, and the rated speed. The rated speed herein represents a maximum speed that a fan is capable of reaching.

For ease of description, in this embodiment, the fan 1 and fan 2 having three working states, namely, OFF, a low air volume speed, and a high air volume speed are taken as an example for illustration. It can be understood that the present invention is not limited thereto.

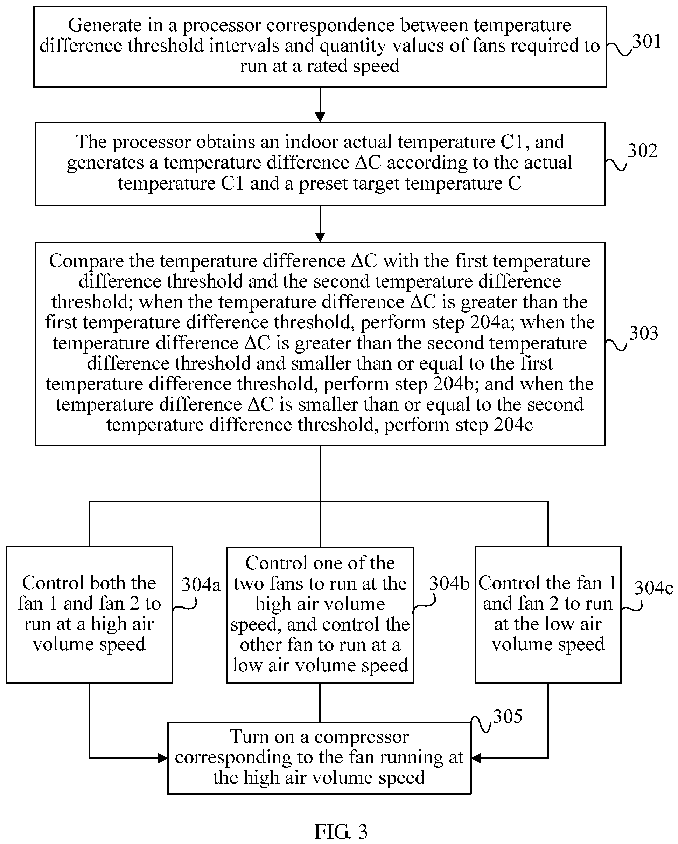

FIG. 3 is a flow chart of air conditioning system fan control method provided in still another embodiment of the present invention. As shown in FIG. 3, the precise air conditioning system fan control method provided in this embodiment includes the following steps:

Step 301: Generate correspondence between threshold intervals and fan quantity values in a processor.

The threshold intervals may be separated by two thresholds, and the three threshold intervals may be: a first threshold interval, all values in the threshold interval being greater than a first threshold, and a fan quantity value corresponding to the first threshold interval being 2; a second threshold interval, values in the second threshold interval being greater than a second threshold and smaller than or equal to the first threshold, and a fan quantity value corresponding to the second threshold interval being 1; and a third threshold interval, values in the third threshold interval being smaller than or equal to a second threshold, and a fan quantity value corresponding to the third threshold interval being 0.

Step 302: The processor obtains an indoor actual temperature C1, and generates a temperature difference ΔC according to the actual temperature C1 and a preset target temperature C, where

$$\Delta C = C1 - C.$$

Step 303: Compare the temperature difference ΔC with the first threshold and the second threshold; when the temperature difference ΔC is greater than the first threshold, perform step 304a; when the temperature

difference ∆C is greater than the second threshold and smaller than or equal to the first threshold, perform step 304b; and when the temperature difference ∆C is smaller than or equal to the second threshold, perform step 304c.

Step 304a: Control both the fan 1 and fan 2 to run at a high air volume speed.

Step 304b: Control one of the two fans to run at the high air volume speed, and control the other fan to run at a low air volume speed. Definitely, whether the fan 1 or fan 2 is selected to run at the high air volume speed may be determined according to a specific working condition, and is not limited herein.

Step 304c: Control the fan 1 and fan 2 to run at the low air volume speed.

Step 305: Turn on a compressor corresponding to the fan running at the high air volume speed.

Specifically, when the fan 1 runs at the high air volume speed and the fan 2 runs at the low air volume speed, it is feasible to turn on the compressor 1 and turn off the compressor 2; when the fan 2 runs at the high air volume speed and the fan 1 runs at the low air volume speed, it is feasible to turn on the compressor 2 and turn off the compressor 1; and when both the fan 1 and fan 2 run at the low air volume speed, it is feasible to turn off the compressor 1 and compressor 2.

The air conditioning system fan control method provided in this embodiment adjusts the number of fans running at a high speed according to a change of the actual ambient temperature, thereby reducing the total output air volume of fans during long-term running, and reducing the energy consumption of the fans. Besides, in this embodiment, while some fans are controlled to run at a high air volume speed, other fans are controlled to run at a low air volume speed, which reduces the total output air volume of the fans, and at the same time prevents fans other than those running at the high air volume speed from rotating in a reverse direction, thereby protecting the fans. In addition, a cooling effect for other auxiliary elements in the system is achieved, preventing other auxiliary elements from being damaged due to overheat, thereby further improving the working reliability of the precise air conditioning system.

The foregoing embodiments are both described by taking an air conditioning system including two fans, two compressors, and two evaporators as an example. However, the technical solution of the present invention is not limited thereto. The technical solution of the present invention also applies to an air conditioning system including more than two fans, more than two compressors, and more than two evaporators, as long as it is ensured that the fans, the compressors, and the evaporators are in one-to-one correspondence; in other words, one fan is used for cooling a corresponding evaporator, and the evaporator is connected to a corresponding compressor, so as to form an independent air duct subsystem.

**Embodiment 4**

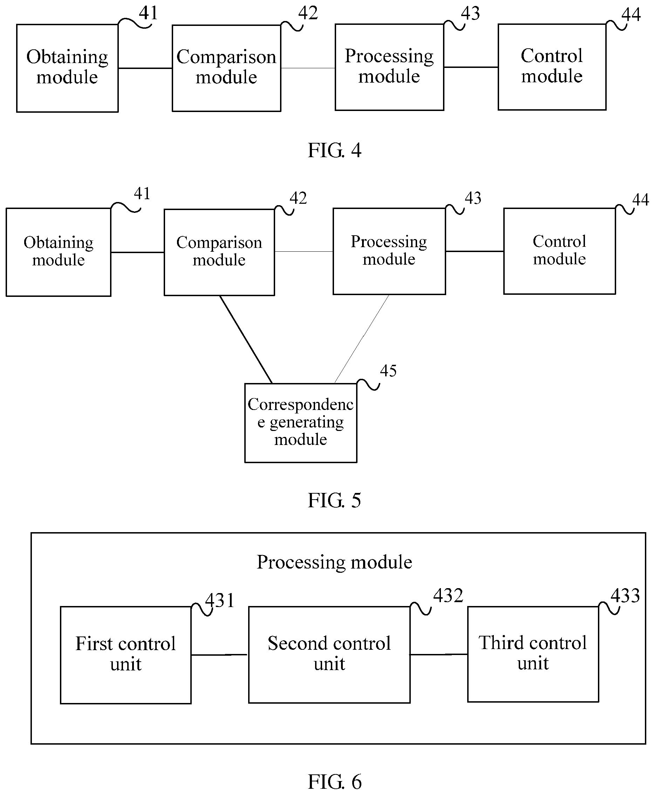

FIG. 4 is a schematic structural diagram of a controller provided in an embodiment of the present invention. As shown in FIG. 4, modules in the controller may jointly execute the processing procedure performed by the controller in the method embodiment corresponding to FIG. 1. The controller provided in this embodiment includes:

an obtaining module 41, configured to obtain an actual indoor temperature, and calculate a temperature difference between the actual temperature and a preset target temperature;

a comparison module 42, configured to compare the temperature difference with threshold intervals to obtain a threshold interval where the temperature difference is located, where the threshold intervals are separated by several thresholds, and each threshold interval corresponds to a fan quantity value;

a processing module 43, configured to obtain a fan quantity value N corresponding to the threshold interval where the temperature difference is located according to correspondence between the threshold intervals and fan quantity values, where N is a natural number; and

a control module 44, configured to control N fans among all the fans to run at a first speed, and control fans other than the N fans among all the fans to run at a second speed, where the first speed is higher than the second speed, N is smaller than the total number of fans M, and M is a natural number.

FIG. 5 is a schematic structural diagram of a controller provided in another embodiment of the present invention. As shown in FIG. 5, the controller may further include:

a correspondence generating module 45, configured to generate correspondence between the threshold intervals and quantity values of fans required to run at the first speed.

FIG. 6 is a schematic structural diagram of an embodiment of the processing module in FIG. 4. As shown in FIG. 6, the processing module may include:

a first control unit 431, configured to: when the threshold interval where the temperature difference is located is a first threshold interval, obtain a fan quantity value N1 corresponding to the first threshold interval;

a second control unit 432, configured to: when the threshold interval where the temperature difference is located is a second threshold interval, obtain a fan quantity value N2 corresponding to the second threshold interval; and

a third control unit 433, configured to: when the threshold interval where the temperature difference is located is a third threshold interval, obtain a fan quantity value N3 corresponding to the second threshold interval, where N1 > N2 >N3, and N1 ≤ M.

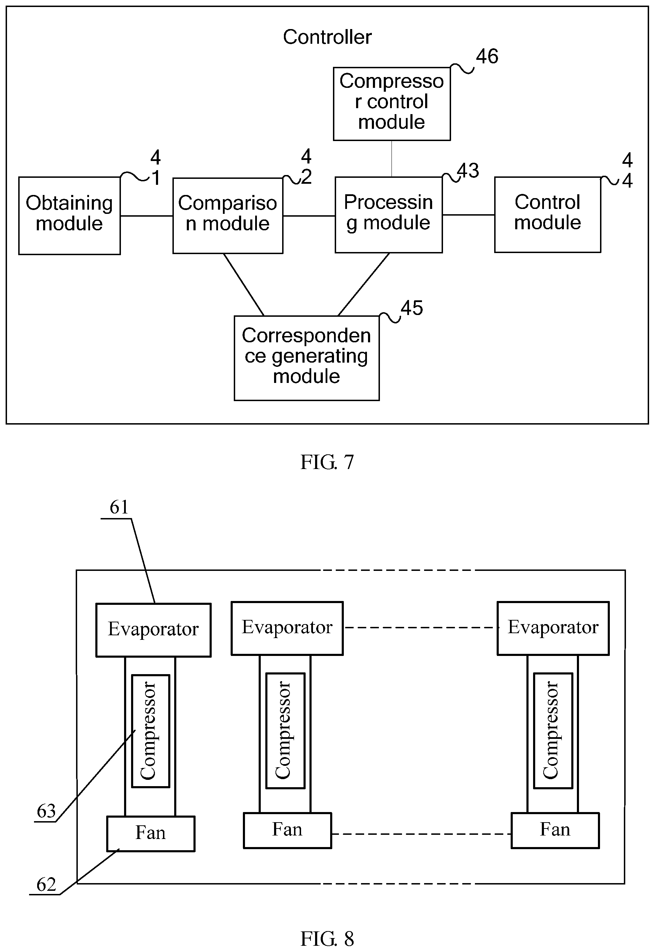

FIG. 7 is a schematic structural diagram of a controller provided in still another embodiment of the present invention. As shown in FIG. 7, modules and units in the controller may jointly execute the processing procedure performed by the controllers in the method embodiments corresponding to FIG. 2 and FIG. 3. On the basis of the controller shown in FIG. 5, this controller may further include:
a compressor control module 46, configured to turn on and/or turn off compressors, so as to control a compressor corresponding to a fan to run.

The controller provided in this embodiment may determine the number of fans required to run at a higher first speed based on an obtained actual temperature, and is capable of controlling some fans to run at a speed lower than a rated speed under the premise of satisfying a set refrigeration requirement, thereby reducing the total output air volume of fans, and thereby reducing the energy consumption of the fans.

FIG. 8 is a schematic structural diagram of an air conditioning system. Referring to FIG. 4 and FIG. 8, the air conditioning system provided in this embodiment includes: M evaporators 61, M compressors 63, M fans 62, and a controller; M is an integer greater than or equal to 2,
where the $K^{th}$ evaporator 61, the $K^{th}$ compressor 63, and the $K^{th}$ fan 62 form a $K^{th}$ air duct subsystem; the $K^{th}$ evaporator 61 may be connected to the $K^{th}$ compressor 63 through a pipeline; the corresponding $K^{th}$ fan 62 is used for cooling the $K^{th}$ evaporator 61; K is an integer, and $1 \leq K \leq M$.

The controller includes:

an obtaining module 41, configured to obtain an actual indoor temperature, and calculate a temperature difference between the actual temperature and a preset target temperature;
a comparison module 42, configured to compare the temperature difference with threshold intervals to obtain a threshold interval where the temperature difference is located, where the threshold intervals are separated by several thresholds, and each threshold interval corresponds to a fan quantity value;
a processing module 43, configured to obtain a fan quantity value N corresponding to the threshold interval where the temperature difference is located according to correspondence between the threshold intervals and fan quantity values, where N is a natural number; and
a control module 44, configured to control N fans among all the fans to run at a first speed, and control fans other than the N fans among all the fans to run at a second speed, where the first speed is higher than the second speed, N is smaller than the total number of fans M, and M is a natural number.

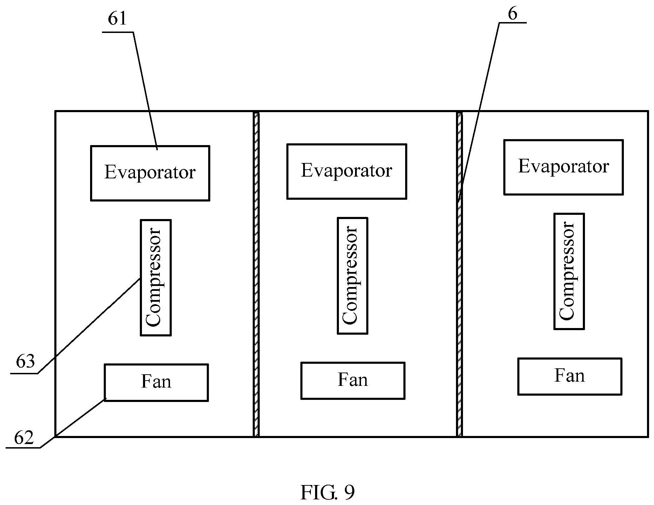

FIG. 9 is a schematic structural diagram of an embodiment of an air conditioning system including three air duct subsystems. As shown in FIG. 9, the precise air conditioning system may further include:

a sensor, configured to detect an actual indoor temperature and transmit the actual indoor temperature to the processor; and
(M-1) separators 6 disposed between adjacent air duct subsystems.

Two adjacent air duct subsystems are separated by a separator 6, that is, a first air duct subsystem and a second air duct subsystem may be separated by a first separator; the second air duct subsystem and a third air duct subsystem may be separated by a second separator; and an (M-1)th air duct subsystem and an Mth air duct subsystem may be separated by an (M-1)th separator.

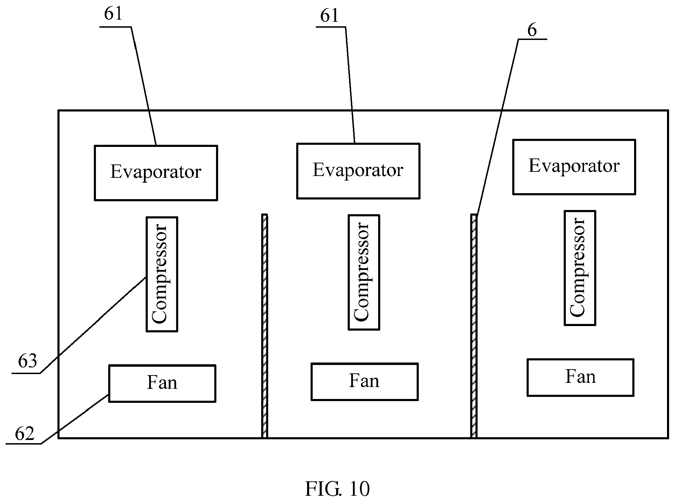

Specifically, the separator 6 may be used for completely separating two adjacent air duct subsystems (as shown in FIG. 9); or the separator 6 may also be used for partially separating two adjacent air duct subsystems; for example, the separator 6 is only disposed between a fan 62 and a compressor 63 of an air duct subsystem and a fan 62 and a compressor 63 of an adjacent air duct subsystem (as shown in FIG. 10).

In addition, the number of sensors may be corresponding to the number of air supply vents in the air conditioning system, so that a sensor is disposed at each air supply vent. At this time, the actual temperature obtained by the controller may be an average value of temperatures detected by the sensors.

The air conditioning system provided in this embodiment may determine the number of fans required to run at a rated speed according to an obtained actual temperature, so as to control some fans to run at a speed lower than the rated speed under the premise of satisfying a set refrigeration requirement, thereby reducing the total output air volume of the fans, and solving the problem in the prior art that the output air volume of the fans in the air conditioning system is constant, and reducing the energy consumption of the fans.

A person of ordinary skill in the art may understand that, all or a part of the processes of the foregoing method embodiments may be implemented by a program instructing relevant hardware. The foregoing program may be stored in a computer readable storage medium. When the program runs, the steps of the foregoing method embodiments are performed. The foregoing storage medium may include any mediums capable of storing program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some or all the technical features thereof, without departing from the scope of the invention as defined in the claims.

**Claims**

1. An air conditioning system fan control method, comprising:

   obtaining an actual indoor temperature, and calculating a temperature difference between the actual temperature and a preset target temperature;
   **characterized by**
   comparing the temperature difference with threshold intervals to obtain a threshold interval where the temperature difference is located, wherein the threshold intervals are separated by several thresholds, and each threshold interval corresponds to a fan quantity value;
   obtaining a fan quantity value N corresponding to the threshold interval where the temperature difference is located according to correspondence between the threshold intervals and fan quantity values, where N is a natural number; and
   controlling N fans among all the fans to run at a first speed, and controlling fans other than the N fans among all the fans to run at a second speed, wherein the first speed is higher than the second speed, N is smaller than the total number of fans M, and M is a natural number.

2. The air conditioning system fan control method according to claim 1, wherein,
   before the obtaining an actual indoor temperature, and calculating a temperature difference between the actual temperature and a preset target temperature, the method further comprises
   generating correspondence between threshold intervals and fan quantity values.

3. The air conditioning system fan control method according to claim 2, wherein the obtaining a fan quantity value N corresponding to the threshold interval where the temperature difference is located according to correspondence between the threshold intervals and fan quantity values comprises:

   if the threshold interval where the temperature difference is located is a first threshold interval, obtaining a fan quantity value N1 corresponding to the first threshold interval;
   if the threshold interval where the temperature difference is located is a second threshold interval, obtaining a fan quantity value N2 corresponding to the second threshold interval; and
if the threshold interval where the temperature difference is located is a third threshold interval, obtaining a fan quantity value N3 corresponding to the second threshold interval,
wherein N1>N2>N3, and N1≤M.

4. The air conditioning system fan control method according to claim 1 or 2, wherein after the controlling N fans among all the fans to run at a first speed, and controlling fans other than the N fans among all the fans to run at a second speed, the method further comprises:
   turning on and/or turning off compressors, so as to control a compressor corresponding to a fan and the fan to form an air conditioning air duct subsystem.

5. A controller for an air conditioning system, comprising:

   an obtaining module, configured to obtain an actual indoor temperature, and calculate a temperature difference between the actual temperature and a preset target temperature;
   **characterized by**
   a comparison module, configured to compare the temperature difference with threshold intervals to obtain a threshold interval where the temperature difference is located, wherein the threshold intervals are separated by several thresholds, and each threshold interval corresponds to a fan quantity value;
   a processing module, configured to obtain a fan quantity value N corresponding to the threshold interval where the temperature difference is located according to correspondence between the threshold intervals and fan quantity values, where N is a natural number; and
   a control module, configured to control N fans among all the fans to run at a first speed, and control fans other than the N fans among all the fans to run at a second speed, wherein the first speed is higher than the second speed, N is smaller than the total number of fans M, and M is a natural number.

6. The controller according to claim 5, further comprising:
   a correspondence generating module, configured to generate correspondence between the threshold intervals and quantity values of fans required to run at the first speed.

7. The controller according to claim 5, wherein the processing module comprises:

a first control unit, configured to: when the threshold interval where the temperature difference is located is a first threshold interval, obtain a fan quantity value N1 corresponding to the first threshold interval;

a second control unit, configured to: when the threshold interval where the temperature difference is located is a second threshold interval, obtain a fan quantity value N2 corresponding to the second threshold interval; and

a third control unit, configured to: when the threshold interval where the temperature difference is located is a third threshold interval, obtain a fan quantity value N3 corresponding to the second threshold interval;

wherein N1>N2>N3, and N1≤M.

8. The controller according to claim 5 or 6, further comprising:

a compressor control module, configured to turn on and/or turn off compressors, each compressor corresponding to a fan,

wherein the fan and the corresponding compressor form an air conditioning air duct subsystem.

**Patentansprüche**

1. Klimatisierungssystem-Ventilatorsteuerungsverfahren, Folgendes umfassend:

Ermitteln einer tatsächlichen Innentemperatur und Berechnen einer Temperaturdifferenz zwischen der tatsächlichen Temperatur und einer voreingestellten Solltemperatur;

**gekennzeichnet durch** Vergleichen der Temperaturdifferenz mit Schwellenwertintervallen, um ein Schwellenwertintervall zu ermitteln, in dem sich die Temperaturdifferenz befindet, wobei die Schwellenwertintervalle durch mehrere Schwellenwerte voneinander getrennt sind und jedes Schwellenwertintervall mit einem Ventilatormengenwert korrespondiert;

Ermitteln eines Ventilatormengenwerts N, der mit dem Schwellenwertintervall korrespondiert, in dem sich die Temperaturdifferenz befindet, gemäß einer Korrespondenz zwischen den Schwellenwertintervallen und Ventilatormengenwerten, wobei N eine natürliche Zahl ist; und

Steuern von N Ventilatoren von allen Ventilatoren, so dass sie mit einer ersten Geschwindigkeit laufen, und Steuern von Ventilatoren, bei denen es sich nicht um die N Ventilatoren von allen Ventilatoren handelt, so dass sie mit einer zweiten Geschwindigkeit laufen, wobei die erste Geschwindigkeit höher als die zweite Geschwindigkeit ist, N kleiner als die Gesamtzahl der Ventilatoren M ist und M eine natürliche Zahl ist.

2. Klimatisierungssystem-Ventilatorsteuerungsverfahren nach Anspruch 1, wobei das Verfahren vor dem Ermitteln einer tatsächlichen Innentemperatur und dem Berechnen einer Temperaturdifferenz zwischen der tatsächlichen Temperatur und einer voreingestellten Solltemperatur ferner das Erzeugen einer Korrespondenz zwischen Schwellenwertintervallen und Ventilatormengenwerten umfasst.

3. Klimatisierungssystem-Ventilatorsteuerungsverfahren nach Anspruch 2, wobei das Ermitteln eines Ventilatormengenwerts N, der mit dem Schwellenwertintervall korrespondiert, in dem sich die Temperaturdifferenz befindet, gemäß einer Korrespondenz zwischen den Schwellenwertintervallen und Ventilatormengenwerten Folgendes umfasst:

falls das Schwellenwertintervall, in dem sich die Temperaturdifferenz befindet, ein erstes Schwellenwertintervall ist, Ermitteln eines Ventilatormengenwerts N1, der mit dem ersten Schwellenwertintervall korrespondiert;

falls das Schwellenwertintervall, in dem sich die Temperaturdifferenz befindet, ein zweites Schwellenwertintervall ist, Ermitteln eines Ventilatormengenwerts N2, der mit dem zweiten Schwellenwertintervall korrespondiert; und

falls das Schwellenwertintervall, in dem sich die Temperaturdifferenz befindet, ein drittes Schwellenwertintervall ist, Ermitteln eines Ventilatormengenwerts N3, der mit dem zweiten Schwellenwertintervall korrespondiert, wobei N1 > N2 > N3 und N1 ≤ M gilt.

4. Klimatisierungssystem-Ventilatorsteuerungsverfahren nach Anspruch 1 oder Anspruch 2, wobei, nachdem dem Steuern von N Ventilatoren von allen Ventilatoren, so dass sie mit einer ersten Geschwindigkeit laufen, und dem Steuern von Ventilatoren, bei denen es sich nicht um die N Ventilatoren von allen Ventilatoren handelt, so dass sie mit einer zweiten Geschwindigkeit laufen, das Verfahren ferner Folgendes umfasst:

Ein- und/oder Ausschalten von Kompressoren, so dass ein mit einem Ventilator korrespondierender Kompressor gesteuert wird und der Ventilator ein Klimatisierungsluft-Kanalteilsystem bildet.

5. Steuerung für ein Klimatisierungssystem, Folgendes umfassend:

ein Ermittlungsmodul, das dafür konfiguriert ist, eine tatsächliche Innentemperatur zu ermitteln und eine Temperaturdifferenz zwischen der tatsächlichen Temperatur und einer voreingestellten Solltemperatur zu berechnen;
**gekennzeichnet durch** ein Vergleichsmodul, das dafür konfiguriert ist, die Temperaturdifferenz mit Schwellenwertintervallen zu vergleichen, um ein Schwellenwertintervall zu ermitteln, in dem sich die Temperaturdifferenz befindet, wobei die Schwellenwertintervalle durch mehrere Schwellenwerte voneinander getrennt sind und mit jedem Schwellenwertintervall ein Ventilatormengenwert korrespondiert;
ein Verarbeitungsmodul, das dafür konfiguriert ist, einen Ventilatormengenwert N zu ermitteln, der mit dem Schwellenwertintervall korrespondiert, in dem sich die Temperaturdifferenz befindet, gemäß einer Korrespondenz zwischen den Schwellenwertintervallen und Ventilatormengenwerten, wobei N eine natürliche Zahl ist; und
ein Steuermodul, das dafür konfiguriert ist, N Ventilatoren von allen Ventilatoren zu steuern, so dass sie mit einer ersten Geschwindigkeit laufen, und Ventilatoren zu steuern, bei denen es sich nicht um die N Ventilatoren von allen Ventilatoren handelt, sodass sie mit einer zweiten Geschwindigkeit laufen, wobei die erste Geschwindigkeit höher als die zweite Geschwindigkeit ist, N kleiner als die Gesamtzahl der Ventilatoren M ist und M eine natürliche Zahl ist.

6. Steuerung nach Anspruch 5, ferner umfassend:
ein Korrespondenzerzeugungsmodul, das dafür konfiguriert ist, eine Korrespondenz zwischen den Schwellenwertintervallen und den Mengenwerten von Ventilatoren zu erzeugen, die mit der ersten Geschwindigkeit laufen müssen.

7. Steuerung nach Anspruch 5, wobei das Verarbeitungsmodul Folgendes umfasst:
eine erste Steuereinheit, die dafür konfiguriert ist:

wenn das Schwellenwertintervall, in dem sich die Temperaturdifferenz befindet, ein erstes Schwellenwertintervall ist, einen Ventilatormengenwert N1 zu ermitteln, der mit dem ersten Schwellenwertintervall korrespondiert;
eine zweite Steuereinheit, die dafür konfiguriert ist:

wenn das Schwellenwertintervall, in dem sich die Temperaturdifferenz befindet, ein zweiter Schwellenwertintervall ist, einen Ventilatormengenwert N2 zu ermitteln, der mit dem zweiten Schwellenwertintervall korrespondiert; und
eine dritte Steuereinheit, die dafür konfiguriert ist:

wenn das Schwellenwertintervall, in dem sich die Temperaturdifferenz befindet, ein drittes Schwellenwertintervall ist, einen Ventilatormengenwert N3 zu ermitteln, der mit dem zweiten Schwellenwertintervall korrespondiert; wobei N1 > N2> N3 und N1 ≤ M gilt.

8. Steuerung nach Anspruch 5 oder 6, ferner umfassend:
ein Kompressorsteuermodul, das dafür konfiguriert ist, Kompressoren ein- und/oder auszuschalten, wobei die Kompressoren jeweils mit einem Ventilator korrespondieren, wobei der Ventilator und der korrespondierende Kompressor ein Klimatisierungsluftkanal-Teilsystem bilden.

**Revendications**

1. Procédé de commande de ventilateur de système de climatisation, consistant à :

obtenir une température intérieure réelle, et à calculer une différence de température entre la température réelle et une température cible prédéfinie ;
**caractérisé par** la comparaison de la différence de température avec des intervalles seuil afin d'obtenir un intervalle seuil où se trouve la différence de température, les intervalles seuil étant séparés par plusieurs seuils, et chaque intervalle seuil correspondant à une valeur de quantité de ventilateur ;
obtenir une valeur N de quantité de ventilateur correspondant à l'intervalle seuil où se trouve la différence de température en fonction de la correspondance entre les intervalles seuil et les valeurs de quantité de ventilateur, N étant un entier naturel ; et à
commander N ventilateurs parmi tous les ventilateurs pour qu'ils fonctionnent à une première vitesse, et commander des ventilateurs autres que les N ventilateurs parmi tous les ventilateurs, pour qu'ils fonctionnent à une seconde vitesse, la première vitesse étant supérieure à la seconde vitesse, N étant inférieur au nombre total M de ventilateurs, et M étant un entier naturel.

2. Procédé de commande de ventilateur de système de climatisation selon la revendication 1, dans lequel, avant d'obtenir une température intérieure réelle et de calculer une différence de température entre la température réelle et une température cible prédéfinie, le procédé consiste en outre à générer une correspondance entre des intervalles seuil et valeurs de quantité de ventilateur.

**3.** Procédé de commande de ventilateur de système de climatisation selon la revendication 2, dans lequel l'obtention d'une valeur N de quantité de ventilateur correspondant à l'intervalle seuil où se trouve la différence de température en fonction de la correspondance entre les intervalles seuil et les valeurs de quantité de ventilateur consiste à :

si l'intervalle seuil où se trouve la différence de température est un premier intervalle seuil, obtenir une valeur N1 de quantité de ventilateur correspondant au premier intervalle seuil ; si l'intervalle seuil où se trouve la différence de température est un deuxième intervalle seuil, obtenir une valeur N2 de quantité de ventilateur correspondant au deuxième intervalle seuil ; et si l'intervalle seuil où se trouve la différence de température est un troisième intervalle seuil, à obtenir une valeur N3 de quantité de ventilateur correspondant au deuxième intervalle seuil, dans lequel N1 > N2 > N3, et N1 ≤ M.

**4.** Procédé de commande de ventilateur de système de climatisation selon la revendication 1 ou 2, dans lequel, après la commande de N ventilateurs parmi tous les ventilateurs pour qu'ils fonctionnent à une première vitesse, et la commande de ventilateurs autres que les N ventilateurs parmi tous les ventilateurs pour qu'ils fonctionnent à une seconde vitesse, le procédé consistant en outre à : allumer et/ou éteindre les compresseurs, de manière à commander un compresseur correspondant à un ventilateur et le ventilateur à former un sous-système de conduit d'air de climatisation.

**5.** Dispositif de commande pour un système de climatisation, comprenant :

un module d'obtention configuré pour obtenir une température intérieure réelle et calculer une différence de température entre la température réelle et une température cible prédéfinie ; **caractérisé par** un module de comparaison configuré pour comparer la différence de température avec des intervalles seuil afin d'obtenir un intervalle seuil où se trouve la différence de température, les intervalles seuil étant séparés par plusieurs seuils, et chaque intervalle seuil correspondant à une valeur de quantité de ventilateur ; un module de traitement configuré pour obtenir une valeur N de quantité de ventilateur correspondant à l'intervalle seuil où se trouve la différence de température en fonction de la correspondance entre les intervalles seuil et les valeurs de quantité de ventilateur, N étant un entier naturel ; et un module de commande configuré pour commander N ventilateurs parmi tous les ventilateurs pour qu'ils fonctionnent à une première vitesse, et commander des ventilateurs autres que les N ventilateurs parmi tous les ventilateurs, pour qu'ils fonctionnent à une seconde vitesse, la première vitesse étant supérieure à la seconde vitesse, N étant inférieur au nombre total M de ventilateurs, et M étant un entier naturel.

**6.** Dispositif de commande selon la revendication 5, comprenant en outre : un module de génération de correspondance configuré pour générer une correspondance entre les intervalles seuil et les valeurs de quantité de ventilateur nécessaires au fonctionnement à la première vitesse.

**7.** Dispositif de commande selon la revendication 5, dans lequel le module de traitement comprend : une première unité de commande configurée pour :

lorsque l'intervalle seuil où se trouve la différence de température est un premier intervalle seuil, obtenir une valeur N1 de quantité de ventilateur correspondant au premier intervalle seuil ; une deuxième unité de commande configurée pour :

lorsque l'intervalle seuil où se trouve la différence de température est un deuxième intervalle seuil, obtenir une valeur N2 de quantité de ventilateur correspondant au deuxième intervalle seuil ; et une troisième unité de commande configurée pour :

lorsque l'intervalle seuil où se trouve la différence de température est un troisième intervalle seuil, obtenir une valeur N3 de quantité de ventilateur correspondant au deuxième intervalle seuil ; dans lequel N1 > N2 > N3 et N1 ≤ M.

**8.** Dispositif de commande selon la revendication 5 ou 6, comprenant en outre : un module de commande de compresseur, configuré pour allumer et/ou éteindre les compresseurs, chaque compresseur correspondant à un ventilateur, dans lequel le ventilateur et le compresseur correspondant forment un sous-système de conduit d'air de climatisation.

Obtain an actual indoor temperature, and calculate a temperature difference between the actual temperature and a preset target temperature ⟿ 101

Compare the temperature difference with threshold intervals to obtain a threshold interval where the temperature difference is located, where the threshold intervals are separated by several thresholds, and each threshold interval corresponds to a fan quantity value ⟿ 102

Obtain a fan quantity value N corresponding to the threshold interval where the temperature difference is located according to correspondence between the threshold intervals and fan quantity values, where N is a natural number ⟿ 103

Control N fans among all the fans to run at a first speed, and control fans other than the N fans among all the fans to run at a second speed, where the first speed is higher than the second speed, N is smaller than the total number of fans M, and M is a natural number ⟿ 104

FIG. 1

Generate correspondence between threshold intervals and fan quantity values in a processor    201

The processor obtains an actual indoor temperature C1, and generates a temperature difference ΔC according to the actual temperature C1 and a preset target temperature C    202

Compare the temperature difference ΔC with the threshold intervals; when the temperature difference ΔC falls within the first threshold interval, perform step 204a; when the temperature difference ΔC falls within the second threshold interval, perform step 204b; and when the temperature difference ΔC falls within the third threshold interval, perform step 204c    203

Control the two fans to run    204a

Control one of the two fans to run, and control the other fan to stay in an OFF state    204b

Turn off the two fans    204c

Turn on a compressor corresponding to the running fan, to start a refrigeration process    205

FIG. 2

Generate in a processor correspondence between temperature difference threshold intervals and quantity values of fans required to run at a rated speed — 301

The processor obtains an indoor actual temperature C1, and generates a temperature difference $\Delta C$ according to the actual temperature C1 and a preset target temperature C — 302

Compare the temperature difference $\Delta C$ with the first temperature difference threshold and the second temperature difference threshold; when the temperature difference $\Delta C$ is greater than the first temperature difference threshold, perform step 204a; when the temperature difference $\Delta C$ is greater than the second temperature difference threshold and smaller than or equal to the first temperature difference threshold, perform step 204b; and when the temperature difference $\Delta C$ is smaller than or equal to the second temperature difference threshold, perform step 204c — 303

Control both the fan 1 and fan 2 to run at a high air volume speed — 304a

Control one of the two fans to run at the high air volume speed, and control the other fan to run at a low air volume speed — 304b

Control the fan 1 and fan 2 to run at the low air volume speed — 304c

Turn on a compressor corresponding to the fan running at the high air volume speed — 305

FIG. 3

```
   ┌──41        ┌──42         ┌──43         ┌──44
┌──────────┐ ┌──────────┐ ┌──────────┐ ┌──────────┐
│ Obtaining│ │Comparison│ │Processing│ │ Control  │
│  module  │ │  module  │ │  module  │ │  module  │
└──────────┘ └──────────┘ └──────────┘ └──────────┘
```

FIG. 4

```
   ┌──41        ┌──42         ┌──43         ┌──44
┌──────────┐ ┌──────────┐ ┌──────────┐ ┌──────────┐
│ Obtaining│ │Comparison│ │Processing│ │ Control  │
│  module  │ │  module  │ │  module  │ │  module  │
└──────────┘ └──────────┘ └──────────┘ └──────────┘

              ┌──────────┐  ┌──45
              │Correspondenc│
              │ e generating│
              │  module   │
              └──────────┘
```

FIG. 5

```
┌──────────────────────────────────────────────────┐
│               Processing module                   │
│   ┌──431           ┌──432            ┌──433        │
│ ┌──────────┐   ┌──────────────┐  ┌──────────┐     │
│ │First control│ │Second control│  │Third control│  │
│ │   unit   │   │    unit     │  │   unit   │      │
│ └──────────┘   └──────────────┘  └──────────┘     │
└──────────────────────────────────────────────────┘
```

FIG. 6

Controller

Compressor control module 46

Obtaining module 41

Comparison module 42

Processing module 43

Control module 44

Correspondence generating module 45

FIG. 7

61

Evaporator

Evaporator

Evaporator

Compressor

Compressor

Compressor

63

Fan

Fan

Fan

62

FIG. 8

FIG. 9

61     61     6

| Evaporator | | Evaporator | | Evaporator |
|---|---|---|---|---|
| Compressor | | Compressor | | Compressor |
| Fan | | Fan | | Fan |

63

62

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6159145 A